## Europäisches Patentamt
## European Patent Office
## Office européen des brevets

(19)

(11) Veröffentlichungsnummer: **0 224 197**
**B1**

(12) # EUROPÄISCHE PATENTSCHRIFT

(45) Veröffentlichungstag der Patentschrift:
**10.08.88**

(51) Int. Cl.⁴: **B 62 D 53/08**

(21) Anmeldenummer: **86116065.3**

(22) Anmeldetag: **20.11.86**

(54) Sattelkupplung.

(30) Priorität: **26.11.85 CH 5037/85**

(43) Veröffentlichungstag der Anmeldung:
**03.06.87 Patentblatt 87/23**

(45) Bekanntmachung des Hinweises auf die Patenterteilung:
**10.08.88 Patentblatt 88/32**

(84) Benannte Vertragsstaaten:
**BE DE ES FR IT NL SE**

(56) Entgegenhaltungen:
**DE-B-1 202 145**
**DE-C-1 145 935**

(73) Patentinhaber: **GEORG FISCHER AKTIENGESELLSCHAFT, Mühlentalstrasse 105, CH- 8201 Schaffhausen (CH)**

(72) Erfinder: **Jakob, Lothar, Schrotzburgstrasse 11, D-7702 Gottmadingen (DE)**
Erfinder: **Kopp, Hans, Dorfstrasse 445, CH- 8448 Uhwiesen (CH)**

## Beschreibung

Die vorliegende Erfindung betrifft eine Sattelkupplung mit einer Kupplungsplatte, die einen Einführungsschlitz aufweist, durch den ein Zugsattelzapfen einführbar ist, wobei zwischen der Kupplungsplatte und dem Zugsattelzapfen ein Verschleissring angeordnet ist, an dem der Königszapfen in der Riegelstellung anliegt.

Da an der Anlagestelle zwischen Zugsattelzapfen und Kupplungsplatte während des Fahrbetriebes grosse Kraftübertragungen erfolgen, unterliegt dieser Bereich der Kupplungsplatte einem grossen Verschleiss. In diesen kraftübertragenden Bereichen kann schon ein kleines Spiel zu enormen Flächenpressungen führen, so dass mit einem starken Materialverschleiss zu rechnen ist.

Deshalb ist man schon früher dazu übergegangen in diesem Bereich einen sogenannten Verschleissring anzuordnen, der dem auftretenden Verschleiss entgegenwirken sollte.

Aus der DE-B-1 202 145 ist beispielsweise ein solcher Verschleissring bekannt geworden. Es handelt sich dabei um ein auswechselbares kragenförmiges Verschleissegment, wobei dieses Segment von der Oberseite der Kupplungsplatte in die für den Zugsattelzapfen bestimmte Ausnehmung eingelassen wird und anschliessend mit der Kupplungsplatte verschraubbar ist.

Nachteilig bei dieser Ausführung, sowie bei den übrigen bekannten und praktizierten Verschleissringanordnungen ist die Tatsache, dass der Verschleissring mit der Kupplungsplatte mittels Schraubverbindungen befestigt wird. Da während der Fahrt durch Unebenheiten der Strasse, wie bereits erwähnt, stark schwankende Zugkräfte und Stosskräfte auftreten, die von den Eigenschwingungen der Kupplung noch überlagert werden, kann es vorkommen, dass die Schraubenverbindungen sich lockern, was zu gefährlichen Situationen führen kann. Zudem sind Schraubenverbindungen immer bearbeitungsintensiv und führen demzufolge zu höheren Kosten.

Aufgabe der vorliegenden Erfindung ist es, einen Verschleissring vorzuschlagen, der einfach und wirtschaftlich in der Herstellung ist einerseits und zur Vereinfachung des Montagevorganges führt.

Diese Aufgabe wird erfindungsgemäss durch die Lehre des ersten Anspruches gelöst.

Weitere vorteilhafte Ausgestaltungen ergeben sich aus den abhängigen Ansprüchen.

Anhand der beigelegten Figuren werden bevorzugte Ausführungsbeispiele gezeigt, die die Erfindung erläutern sollen.

Es zeigen:

Fig. 1 eine Draufsicht auf eine Kupplungsplatte mit einem einzuführenden Verschleissring,

Fig. 2 einen Querschnitt entlang der Linie B-B.

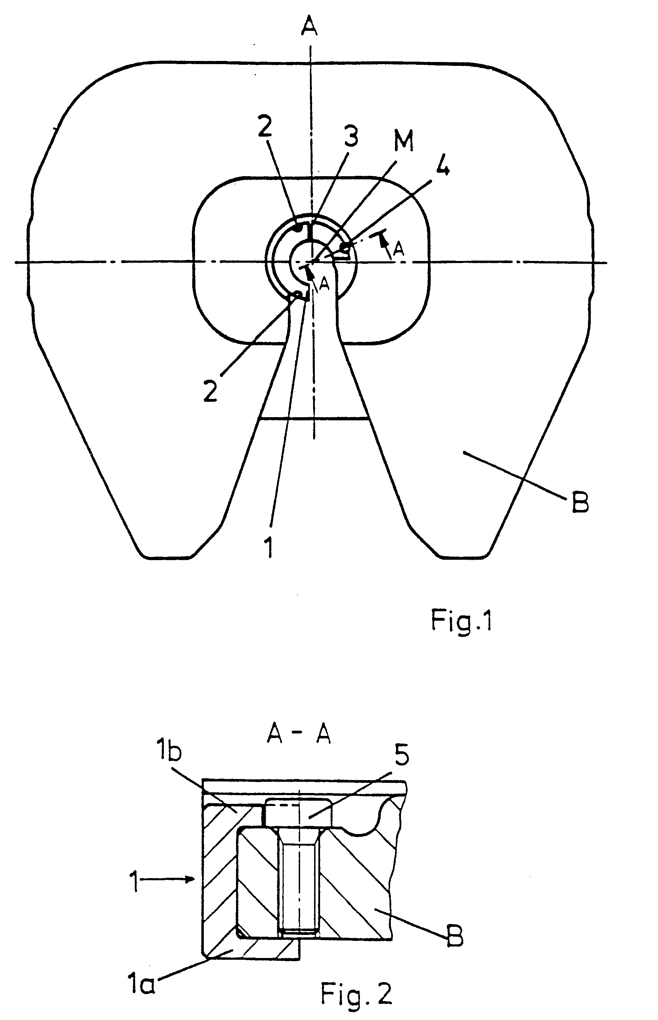

Die Fig. 1 zeigt einen Verschleissring 1, der im wesentlichen halbkreisringförmig ist. Halbkreisförmige Ausnehmungen 2 sind symmetrisch bezüglich der Mittelachse A angeordnet. Der Verschleissring 1 weist, wie in der Fig. 2 dargestellt, einen U-förmigen Querschnitt auf. Die beiden Schenkel 1a, 1b ragen vom Mittelpunkt M des Ringes radial weg. Diese Schenkel sind dazu bestimmt, die Kupplungsplatte B in der Art einer Klammer zu umfassen, so dass eine Positionierung des Verschleissringes an der Kupplungsplatte möglich ist. Die Ausnehmungen 2, die nur im Schenkel 1b angeordnet sind, sind dazu bestimmt, dass sie in Zusammenwirkung mit einer Bohrung 4 in der Kupplungsplatte das Durchschieben eines Querbolzens ermöglichen.

Das Anbringen des Verschleissringes geschieht folgenderweise:

Der Verschleissring 1 wird gedreht, so dass der Stirnseitenbereich 3 des Ringes in der Ausnehmung, die für die Aufnahme des Zugsattelzapfens bestimmt ist, auf die Kupplungsplatte gedrückt wird. Sobald eine feste Umklammerung erreicht ist, wird der Ring langsam entlang der Ausnehmung in ihre vorgesehene Position geschoben. Diese Position ist dann erreicht, wenn die Ausnehmungen 2 mit den entsprechenden, in der Kupplungsplatte angebrachten Bohrungen fluchten. Dann werden Fixierbolzen 5 eingeschoben und beispielsweise mittels eines Splintes in Position gehalten. Damit ist eine Verdrehsicherung auf eine einfache Art erreicht.

Herstellungsmässig findet in sofern eine Vereinfachung statt, als für die Ausführung des erfindungsgemässen Vorschlages rohrförmige Elemente verwendet werden können. Da die Verschleissringe nur halbringförmig sind, können diese Rohrteile entlang des Durchmessers durchgesägt werden, so dass in einem Arbeitsgang zwei in Sattelkupplungen einsetzbare Verschleissringe gefertigt werden können.

## Patentansprüche

1. Sattelkupplung mit einer Kupplungsplatte (B), die einen Einführungsschlitz aufweist, durch den ein Zugsattelzapfen einführbar ist, wobei zwischen der Kupplungsplatte (B) und dem Zugsattelzapfen ein Verschleissring (1) angeordnet ist, an dem der Zugsattelzapfen in der Riegelstellung anliegt dadurch gekennzeichnet, dass der Verschleissring einen U-förmigen Querschnitt mit radial vom Mittelpunkt des Ringes wegragenden Schenkeln (1a, 1b) aufweist und auf die Kupplungsplatte schiebbar ist, so dass die Schenkel je an der Unter- bzw. Oberseite der Kupplungsplatte in der Art einer Klammer anliegen.

2. Sattelkupplung nach Anspruch 1, dadurch gekennzeichnet, dass der Verschleissring im wesentlichen halbkreisringförmig ausgebildet ist.

3. Sattelkupplung nach Anspruch 1, dadurch gekennzeichnet, dass mindestens ein Schenkel (1b) mindestens eine halbkreisförmige Ausnehmung (2) aufweist.

4. Sattelkupplung nach Anspruch 3, dadurch gekennzeichnet, dass die Ausnehmungen (2) in Zusammenwirkung mit einer ergänzenden Ausnehmung (4) in der Kupplungsplatte für die Aufnahme eines Fixierstiftes bestimmt sind.

5. Sattelkupplung nach Anspruch 3, dadurch gekennzeichnet, dass mindestens zwei symmetrisch sich gegenüberliegende Ausnehmungen (2) angeordnet sind.

6. Sattelkupplung nach einem der Ansprüche 1 oder 2, dadurch gekennzeichnet, dass der Verschleissring aus Stahl, Kunststoff oder Gummi gefertigt ist.


## Claims

1. Saddle coupling with a coupling plate (B), which has an insertion slot through which can be introduced a tension saddle pin, a wearing ring (1) being arranged between the coupling plate (B) and the tension saddle pin and the latter engages thereon in the locking position, characterized in that the wearing ring has a U-shaped cross-section with legs (1a, 1b) directed radially away from the centre of the ring and which can be slid onto the coupling plate, so that each of the legs engages on either the top or bottom of the coupling plate in the manner of a clamp.

2. Saddle coupling according to claim 1, characterized in that the wearing ring is substantially semicircular.

3. Saddle coupling according to claim 1, characterized in that at least one leg (1b) has at least one semicircular recess (2).

4. Saddle coupling according to claim 3, characterized in that the recesses (2), in conjunction with a supplementary recess (4) in the coupling plate, serve to receive a fixing pin.

5. Saddle coupling according to claim 3, characterized in that there are at least two symmetrically facing recesses (2).

6. Saddle coupling according to one of the claims 1 or 2, characterized in that the wearing ring is made from steel, plastic or rubber.


## Revendications

1. Sellette d'attelage comprenant une plaque d'attelage (B) qui présente une fente d'introduction à travers laquelle peut être introduit un pivot d'accouplement de semi-remorque, une bague d'usure (1) contre laquelle le pivot d'accouplement de semi-remorque s'appuie en position de verrouillage étant placée entre la plaque d'attelage (B) et le pivot d'accouplement de semi-remorque, caractérisée en ce que la bague d'usure présente une section transversale en U avec des ailes (1a, 1b) s'éloignant radialement du centre de la bague et peut être glissée sur la plaque d'attelage, de sorte que les ailes soient appliquées à la manière d'une pince l'une sur le côté inférieur et l'autre sur le côté supérieur de la plaque d'attelage.

2. Sellette d'attelage selon la revendication 1, caractérisée en ce que la bague d'usure est réalisée pour l'essentiel en forme d'anneau demi-circulaire.

3. Sellette d'attelage selon la revendication 1, caractérisée en ce qu'au moins une aile (1b) présente au moins un évidement semi-circulaire (2).

4. Sellette d'attelage selon la revendication 3, caractérisée en ce que les évidements (2) sont destinés, en coopérant avec un évidement complémentaire (4) dans la plaque d'attelage, à recevoir un goujon de fixation.

5. Sellette d'attelage selon la revendication 3, caractérisée en ce qu'au moins deux évidements (2) symétriquement opposés sont prévus. .

6. Sellette d'attelage selon l'une des revendications 1 ou 2, caractérisée en ce que la bague d'usure est fabriquée en acier, en matière plastique ou en caoutchouc.

A

Fig.1

A - A

Fig. 2